# EUROPÄISCHE PATENTSCHRIFT

(11) **EP 1 054 750 B1**
(45) Veröffentlichungstag und Bekanntmachung des Hinweises auf die Patenterteilung: **23.01.2002**
(21) Anmeldenummer: 98965198.9
(22) Anmeldetag: 29.11.1998
(51) Int. Cl.: B23Q 1/28, F15B 15/26, F16B 2/24

(54) **FESTSTELLEINRICHTUNG**
FIXING DEVICE
DISPOSITIF DE FIXATION

(30) Priorität: 28.01.1998 DE 19803214; 26.07.1998 DE 19833483; 12.08.1998 DE 29814483 U; 07.10.1998 DE 19846187; 29.10.1998 DE 19849990
(43) Veröffentlichungstag der Anmeldung: 29.11.2000
(73) Patentinhaber: Frenotech Establishment, 9494 Schaan (LI)
(72) Erfinder: MAINARDI, Gianfranco, CH-9434 Au (CH)
(74) Vertreter: Säger, Manfred, Dipl.-Ing.
(86) Internationale Anmeldenummer: EP9807704
(87) Internationale Veröffentlichungsnummer: WO9938645

(56) Entgegenhaltungen:
- EP-A- 0 753 670
- DE-A- 2 719 822
- DE-A- 4 012 524
- US-A- 2 806 723
- US-A- 4 214 795

## Beschreibung

Die Erfindung betrifft eine Feststelleinrichtung gemäss dem Oberbegriff des Hauptanspruchs.

Solche Feststelleinrichtungen sind an sich bekannt (US-PS 2,806,723; Figur 7). Nachteilig bei dieser bekannten Vorrichtung ist, dass sie nur konzentrisch zu der zu bremsenden Stange oder Welle angeordnet werden kann.

Deshalb sind schon im wesentlichen sich senkrecht zu der bremsenden Stange oder Welle erstreckende, sogenannte Feststellpatronen entwickelt worden (DE-A-40 12 524).

Beide bekannten Ausführungsformen haben jedoch den Nachteil, dass sie eine kompakte Bauweise nicht aufweisen, wodurch der Einsatz beschränkt ist.

Der Erfindung liegt die Aufgabe zu Grunde, eine gattungsgemässe Feststelleinrichtung nach dem Oberbegriff des Hauptanspruchs mit kurzer Bauweise auszugestalten.

Diese Aufgabe wird bei einer gattungsgemässen Einrichtung gemäss dem Oberbegriff des Hauptanspruchs erfindungsgemäss durch dessen kennzeichnende Merkmale gelöst.

Erfindungsgemäß ist der Abstand vom Mittelpunkt jeder Durchgangsöffnung zu dem Kipplager (erster Abstand) zu dem zweiten Abstand (Abstandmittelpunkt) jeder Durchgangsöffnung zu dem Bereich des Angriffs der Betätigungsnase an jedem Klemmbacken so ausgebildet, daß der zweite Abstand kleiner als der erste Abstand ist. Hierbei wird durch die Feder bewirkt, daß sich jeder Klemmbacken im Bereich seiner Durchgangsöffnung an die Oberfläche der Stange anlegt. Wenn eine Hin- oder Herbewegung der Stange hinzukommt, wird infolge des großen Abstandes des Mittelpunktes der Durchgangsöffnung von dem Kipplager eine Selbstklemmung bewirkt, und zwar von demjenigen der beiden Klemmbacken, welcher in Bewegungsrichtung der Stange vorne liegt. Der in Bewegungsrichtung der Stange dahinterliegende Klemmbacken wird hierbei nicht gebremst und kann auch bei dem vorhandenen Spiel der Feststellpatrone zur Anlage an dem Gehäuse kommen, wodurch seine Klemmung ebenfalls gelöst würde. Der in Bewegungsrichtung vordere Klemmbacken jedoch wird hierbei vom Gehäuse weg bewegt und kann insoweit nicht zu einer ungewollten vorzeitigen Lösung der Klemmung bewirkt werden. Insoweit muß die Feder nur eine so große Kraft aufbringen, daß die beiden Klemmbacken aufeinander zu bewegt werden und sich mit ihrem Bereich der Durchgangsöffnung an der Oberfläche der Stange anlegen. Es bedarf keiner Erwähnung, daß die beiden Klemmbacken in dieser zweiten Lage selbstverständlich ein ausreichend bemessenes Spiel als Abstand voneinander besitzen müssen, um eine hinreichend zuverlässige Klemmung bei der Bewegung der Stange ausüben zu können. Weil keine große Feder und auch keine großen Betätigungshebel (zweiter Abstand) notwendig sind, kann die erfindungsgemäße Feststelleinrichtung ebenfalls eine kurze Bauhöhe aufweisen.

Erfindungsgemäß stützt sich die Betätigungsnase mit ihrer der Stützebene zugewandten Rückseite auf der Stützebene des Betätigungskolbens lose, gewissermassen schwimmend ab. Hierdurch bedingt kann der Betätigungskolben eine kurze Bauhöhe aufweisen, ohne dass die Gefahr besteht, dass er sich bei seiner Betätigung verkantet, wodurch die Funktionsfähigkeit beeinträchtigt wäre. Ohne Einwirken der Betätigungsnase auf die Klemmbacken werden diese von der Kraft der Feder aufeinander zugedrückt, so dass sich die Klemmbacken in der ersten (unbelasteten) Lage um das Kipplager aufeinander zubewegen. Die Durchgangsöffnungen an den beiden Klemmbacken, die die Stange mit geringem Spiel umgreift, klemmen in dieser ausschliesslich von der Kraft der Feder bewirkten ersten Lage die Stange. Wird der Betätigungskolben beispielsweise pneumatisch betätigt, so wird die Betätigungsnase zwischen die Klemmbacken geschoben und von der genannten ersten, von der Kraft der Feder belasteten in die zweite Lage, vorzugsweise zur Parallellage der beiden Klemmbacken aufeinander zubewegt, wodurch die von den Begrenzungen der Durchgangöffnungen der Klemmbacken geklemmte Stange freikommt und sich in dieser zweiten Lage frei bewegt werden kann. Hierdurch bedingt reicht ein kurzer Hub aus, um die beiden Klemmbacken in die zweite Lage zu bringen.

Die Feder kann hierbei als offener, z. B. torusförmiger, gesprengter Stahlring oder geschlossen ausgebildet sein und beispielsweise auch aus Kunststoff bestehen. In der geschlossenen Form kann er ebenfalls torusförmig oder als Hohlzylinder ausgebildet sein. Im erstgenannten Fall sollte er in einer umlaufenden, an die Form der Feder angepasste Nut eingelegt sein. Im zweiten Fall als Hohlzylinder ausgebildete Kunststofffeder sollte nur sichergestellt sein, dass sie nicht in ihrer Lage verrutschen kann, also beispielsweise durch auf ihrer Ober- und/oder Unterseite angebrachte Anschläge. Die Feder kann hierbei entweder bezüglich der Durchgangsöffnungen der Klemmbacken an der dem Kipplager abgewandten Seite angeordnet sein und/oder auf derselben Seite wie das Kipplager. Das Kipplager kann als Berührungsstelle der beiden Klemmbacken aneinander und/oder in diesem Bereich innerhalb der Hülse der Festellpatrone angeordnet sein, oder aber ein separat in das eine Ende der Hülse der Feststellpatrone eingesetzter Stift sein, längs dessen Mantel sich die Klemmbacken bewegen können.

Infolge dieser Ausbildung kann, ohne dass ein Verkanten des Betätigungskolbens zu befürchten ist, dieser relativ kurz bauen. Wegen einer als entlang der Längsachse geteilter Stift ausgebildeten Betätigungsnase ist eine weitere Verkürzung der Bauhöhe möglich, wobei dieser Stift mit seinem Mantel an zwei entsprechend abgeschrägte Führungsflächen der Klemmbacken zur Anlage kommt und angreift, um schon bei geringstem Hub diese beiden von der ersten in die zweite Lage zu verschieben. Diese Bauweise lässt eine äusserst kurze Bauhöhe der erfindungsgemässen Feststellpatrone zu.

Durch Teilung jedes einzelnen Klemmbackens werden zumindest zwei weitere innere Klemmbacken vorgesehen, wodurch eine bessere Klemmfunktion erzielt werden kann, ohne daß zusätzlicher Raum benötigt wird. Somit kann diese zweckmäßige Weiterbildung der Erfindung ohne großen technischen Aufwand in bereits bestehende und funktionierende Systeme integriert werden, da lediglich ein Bauteil bei unveränderter Dimensionierung der Feststelleinrichtung, nämlich die beiden Klemmbacken gegen die jeweils geteilten Klemmbacken mit je einer inneren Klemmbacke ausgewechselt werden muß.

Weitere zweckmässige Ausgestaltungen und Weiterbildungen der Erfindung sind in den Unteransprüchen gekennzeichnet.

Mit ganz besonderem Vorteil kann die erfindungsgemässe Feststelleinrichtung in einem Kompaktzylinder verwendet werden, dessen Gehäuse zu diesem Zweck eine an die Form der Hülse angepasste, vorzugsweise zylindrische Ausnehmung (quer), vorzugsweise rechtwinklig zum Verlauf seiner zu bremsenden (Kolben-) Stange aufweist.

Ein Ausführungsbeispiel der Erfindung wird nachfolgend unter Bezugnahme auf die Zeichnung näher erläutert. In dieser zeigt:
- Figur 1: die als Feststellpatrone ausgebildete Feststelleinrichtung gemäss der Erfindung im Einsatz bei einem Kompaktzylinder, im schematischen Querschnitt;
- Figur 2: die Feststellpatrone gemäss Figur 1, in Alleinstellung und grösserem Massstab.
- Figur 3: eine zweite alternative Ausführungsform der Erfindung;
- Figur 4: eine dritte Ausführungsform der Erfindung;
- Figur 5: eine vierte Ausführungsform der Erfindung;
- Figur 6: eine fünfte Ausführungsform der Erfindung und
- Figur 7: eine sechste Ausführungsform der Erfindung, jeweils im schematischen Querschnitt.

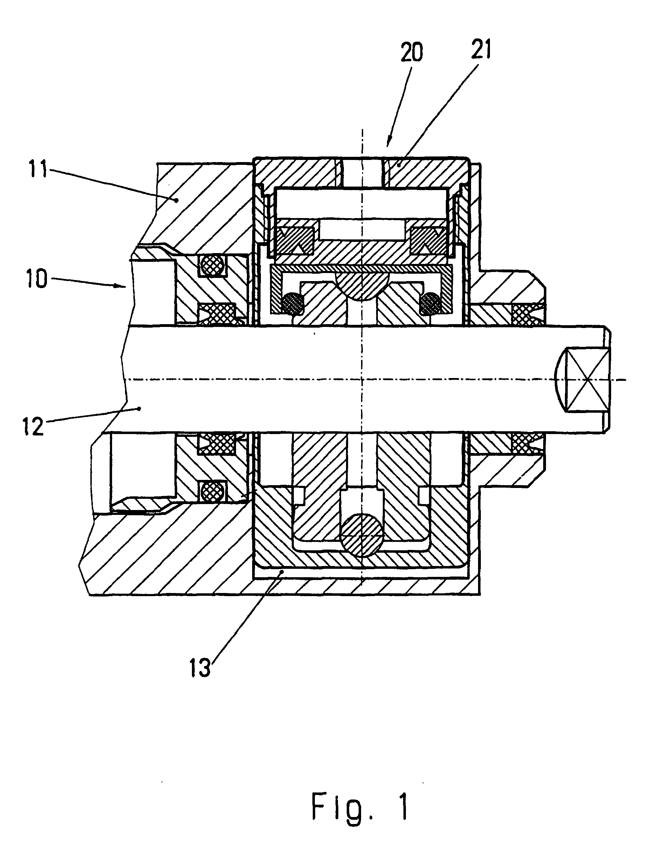

In Figur 1 ist das vordere Ende eines insgesamt mit 10 bezeichneten Kompaktzylinders gezeigt, dessen Kolbenstange (12 in Figur 1 nach rechts) hinausragt.

In dem Gehäuse 11 ist eine insgesamt mit 13 bezeichnete Ausnehmung vorgesehen, die sich quer zur Achse der Kolbenstange 12, vorzugsweise rechtwinklig erstreckt. In dieser Ausnehmung 13 ist eine insgesamt mit 20 bezeichnete, als Feststellpatrone ausgebildete Feststelleinrichtung angeordnet, deren Hülse 21 an die Form der Ausnehmung 13 bzw. umgekehrt angepasst ist und Durchgangsöffnungen für die Stange 12 aufweist, die von der Feststellpatrone 20 gebremst werden kann.

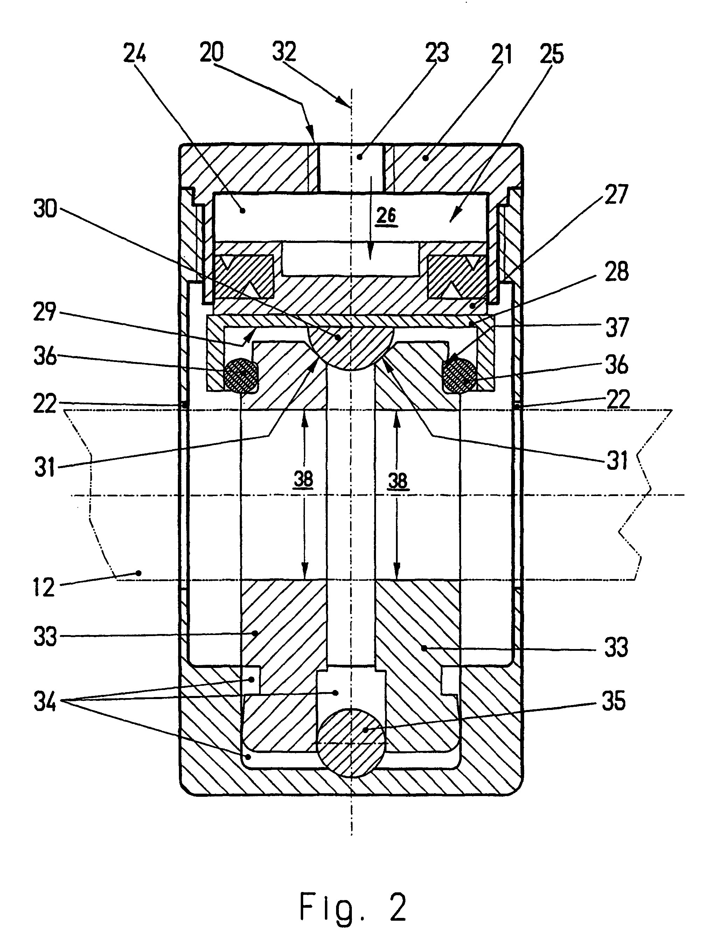

Die Feststellpatrone 20 ist in Figur 2 näher dargestellt. Die Hülse 21 weist Oeffnungen 22 für die Kolbenstange 12 auf. Ferner ist am (in Figur 2 oberen) Ende der Hülse 21 eine Zuführöffnung 23 vorgesehen, mittels der der Kolbenraum 24 mittels eines Fluids, vorzugsweise pneumatisch beaufschlagt werden kann, so dass der insgesamt mit 25 bezeichnete Kolben gemäss Richtungspfeil 26 bewegbar ist.

Der Betätigungskolben 25 ist zweigeteilt mit einem Hubteil 27 und einem eigentlichen Betätigungsteil 28, die über eine planebene Vorderseite des Hubteils 27 bzw. eine planebene Rückseite des Betätigungsteils 28 aneinander gewissermassen schwimmend gelagert abgestützt sind.

Das Betätigungsteil 28 ist hierbei als im Querschnitt U-förmiger Deckel ausgebildet, der auf seiner dem eigentlichen Hubteil 27 abgewandten Seite 29 die insgesamt mit 30 bezeichnete Betätigungsnase aufweist, die als parallel zu seiner Mittelachse geteilter Stift ausgebildet und an der Innenseite des Deckels angebracht ist. Er wird mit zwei abgeschrägten Steuerflächen 31 von zwei symmetrisch zueinander bezüglich der Mittelebene 32 der Feststellpatrone 20 angeordneten Klemmbacken 33 zusammen, die an dem zu dem Betätigungsfeld 28 entgegengesetzten Ende in einer Vertiefung 34 der Hülse 21 als Kipplager kippbar gelagert sind und mittels eines an der Hülse 21 festgelegten, durchgehenden Distanzstiftes 35 auf Abstand zueinander gehalten werden, wobei der Distanzstift 35 zugleich auch als Kipplager dient.

An den beiden Enden der Klemmbacken 33 mit den Steuerflächen 31 ist ferner als Feder ein um die beiden Klemmbacken 33 herumgelegter O-Ring 36 vorgesehen, der in eine umlaufende Nut 37 an den Klemmbacken eingelegt ist und dazu dient, die Klemmbacken um den Distanzstift 35 als Kipplager herumgekippt aufeinander zu auf Abstand zu halten. In dieser ersten (nicht gezeigte) Lage ist dann die Kolbenstange 12 gebremst. Bei Beaufschlagung des Betätigungskolbens 27, 28 bewegt dieser sich gemäss Richtungspfeil 26 mit seiner Betätigungsnase 30 auf die beiden Steuerflächen 31 der Klemmbacken 33 zu, wobei diese in diesem Bereich entgegen der Kraft des sie umgebenden O-Rings 36 voneinander weg (nach aussen) bewegt werden, wobei die Durchgangsöffnungen (38) der beiden Klemmbacken 33 zugleich die Kolbenstange 12 freigeben.

Durch die deckelförmige Ausbildung des Betätigungsteils 28 kann ferner vorgesehen sein, dass die Auseinanderbewegung der beiden Klemmbacken 33 von dem umlaufenden Rand des deckelförmigen Betätigungsgliedes 28 als Anschlag begrenzt werden. Diese (in Figur 2 gezeigten) zweite Lage wird solange aufrecht erhalten, bis die Beaufschlagung mit Druck aufgehört hat. Dann wird infolge der Kraft des als Feder wirkenden O-Rings 36 sowohl die erste Lage der beiden Klemmbacken 33 als auch Verschiebung der Betätigungsnase 30 entgegen dem Richtungspfeil 26 (in Figur 2 nach oben) die erste Lage bewegt.

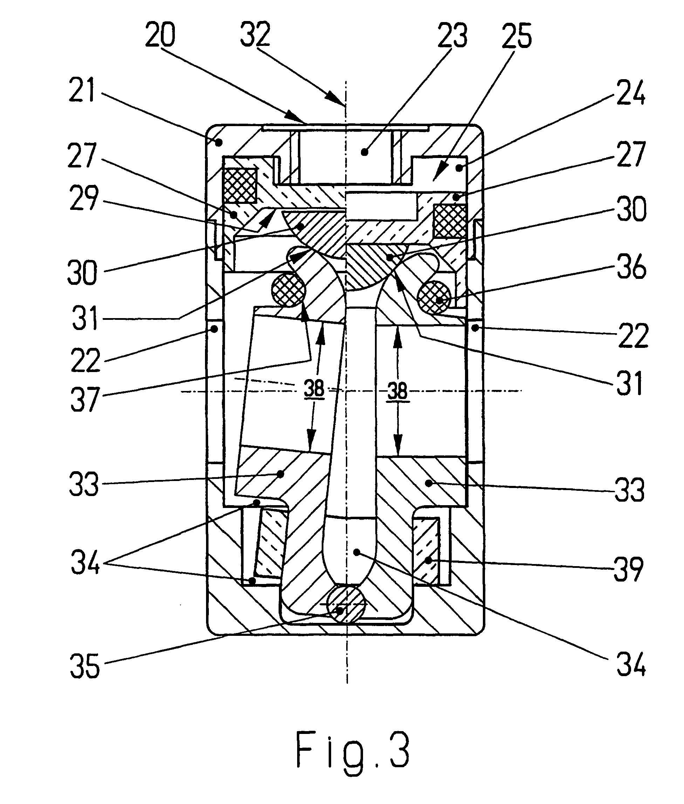

Bei den Ausführungsformen gemäss den Figuren 3 bis 6 ist, bezüglich der Symmetrieebene in der Mitte in der linken Seite die unbetätigte Stellung und in der rechten Seite die ungeklemmte erste bzw. zweite Stellung gezeigt. Gleiche Teile erhalten gleiche Bezugszeichen. Der Unterschied aller Ausführungsformen gemäss jener nach Figur 1 oder 2 besteht darin, dass die Betätigungsnase sich mit ihrer Rückseite an der Stützfläche des Betätigungskolbens abstützt. Die Unterschiede bestehen darin, dass an verschiedenen Stellen verschieden geformte Federn vorgesehen werden und dass einmal als Kipplager der Distanzstift 35, oder auch nicht vorgesehen ist, wobei in letztgenannterem Fall sich die Klemmbacken aneinander selbst abstützen.

Die zweite Ausführungsform gemäss Figur 3 weist darüber hinaus in ihrem bezüglich der Durchgangsöffnung 38 dem Kipplager 35 abgewandten Seite eine als Kunststoff-O-Ring (torusförmig) Kunststoffeder um die beiden Klemmbacken vollständig in einer Nut herumgelegt ist, wobei zusätzlich auf derselben Seite bezüglich der Durchgangsöffnungen 38 des Kipplagers 35 ein weiterer, diesmal hohlzylindrisch ausgebildete Feder 39 in diesem Bereich um die beiden Klemmbacken 33 vollständig herumgelegt ist.

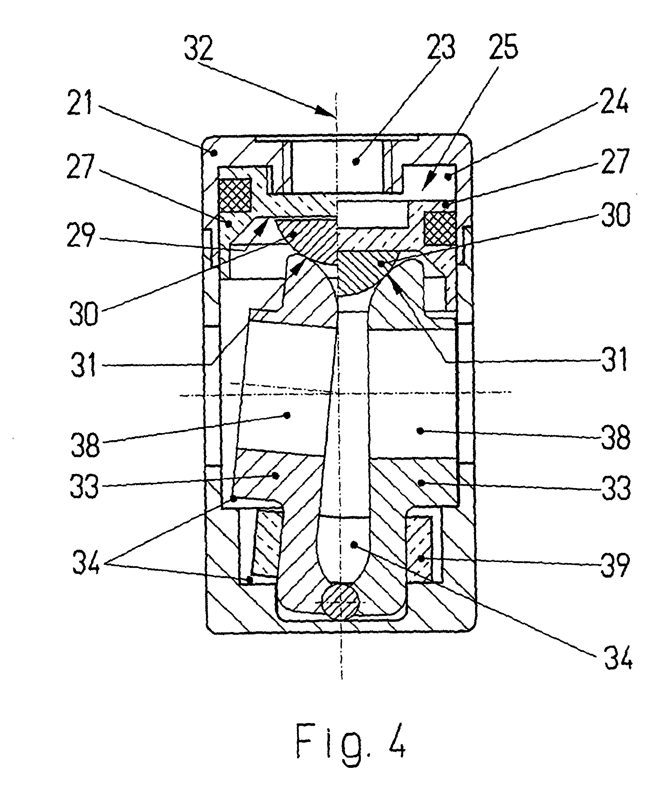

Bei der dritten Ausführungsform gemäss Figur 4 ist die letzgenannte, hohlzylindrische Kunststofffeder 39 alleine vorgesehen.

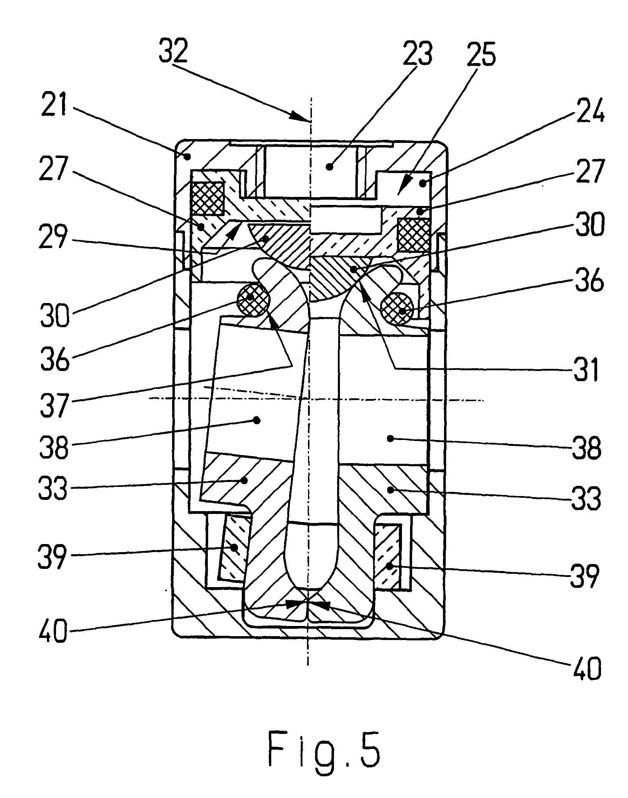

Bei der vierten Ausführungsform gemäss Figur 5, die im Übrigen jener gemäss Figur 3 entspricht, ist lediglich der Distanzstift 35 als Kipplager 40 entfallen. Dort stützen sich die Klemmbacken 33 in diesem Bereich aneinander selbst als Kipplager 40 ab.

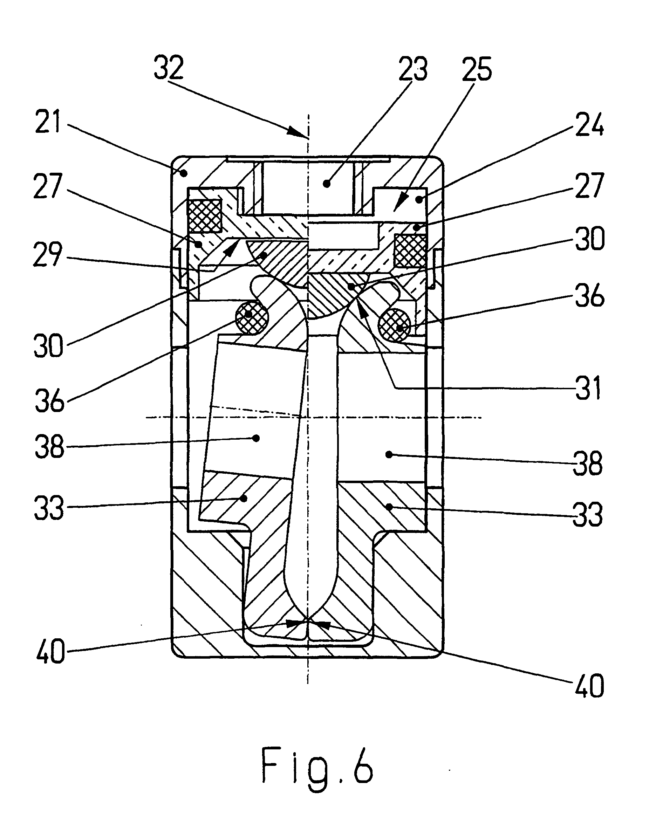

Die fünfte Ausführungsform gemäss Figur 6 weist ebenso wie die vierte Ausführungsform gemäss Figur 5 einen gesonderten Distanzstift als Kipplager 40 nicht auf. In Abweichung hierzu ist aber die im Kipplagerbereich vorgesehene hohlzylindrische Feder entfallen. Es ist lediglich in dem dem Kipplager abgewandten Bereich ein einziger, torusförmiger, geschlossener O-Ring aus Kunststoff, vorzugsweise Polyuretan vorgesehen.

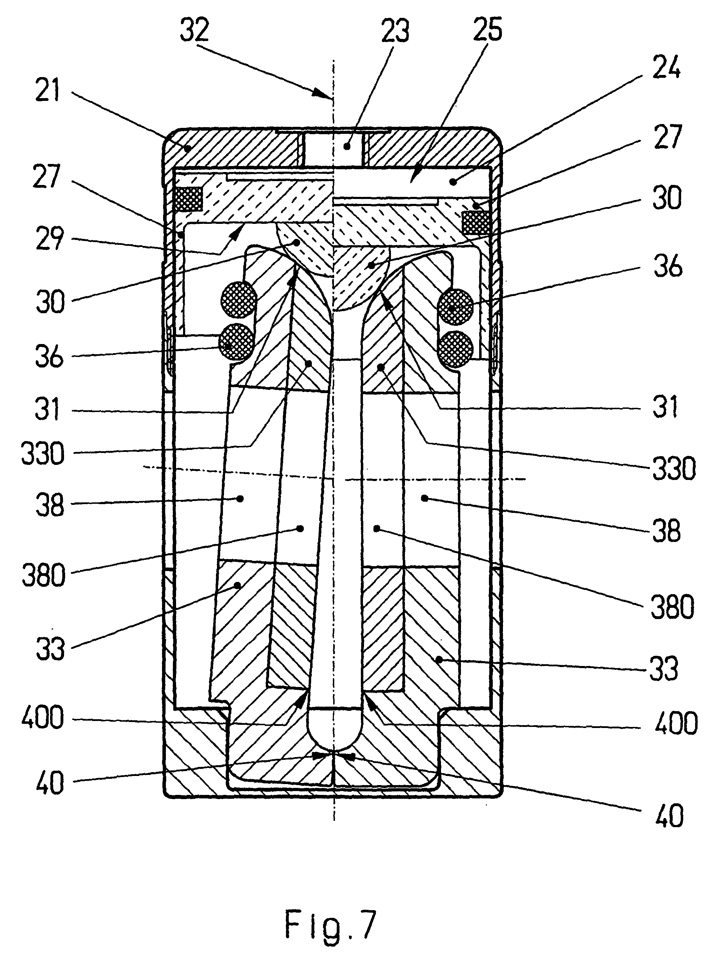

Die Ausführungsform gemäß Figur 7 weist im Unterschied zu den vorangegangenen Ausführungsformen zwei Federn 36 auf und jeder Klemmbacken 33 ist mit einem inneren Klemmbacken 330 versehen, der an ihm kraftschlüssig anliegt und eine zu der Durchgangsöffnung 38 fluchtende innere Durchgangsöffnung 380 aufweist. Sie sind von einer inneren Spreizlage (Figur 7, rechte Seite in eine innere Nachbarschaftslage zueinander (Figur 7, linke Seite) um ein inneres Schwenklager 400 schwenkbar,
wobei die innere Spreizlage und die innere Nachbarschaftslage als die Achse 12 mit den inneren Klemmbacken 330 kraftschlüssig festlegende Feststellage bzw. die Bewegung der Achse 12 in den inneren Durchgangsöffnungen (380) zulassende Freigabelage oder umgekehrt dienen. Die Betätigungsnase 30 liegt hierbei vorzugsweise mit ihrer Steuerfläche 31 an den inneren Klemmbacken 330 an, die mit diesen Steuerflächen vornehmlich oder zusätzlich zu den Klemmbacken 33 versehen sind.

Ansonsten ist die Ausführungsform gemäß Figur 7 funktions- und baugleich zu den vorangegangenen Ausführungsformen, wobei wie auch bei den anderen Figuren gleich Bezugsziffern gleiche Teile darstellen.

## Patentansprüche

1. Feststelleinrichtung mit zwei symmetrisch zueinander angeordneten, mit je einer Durchgangsöffnung (38) für eine durch diese hindurchgehende Stange, Welle oder Achse (12) versehene Klemmbacken (33), mit zumindest einer bewegbaren Betätigungsnase (30) zum Angriff zwischen den Klemmbacken (33) entgegen der Kraft zumindest einer Feder (36,39), die die Klemmbacken aufeinander um ein Kipplager (35,40) in eine die Stange nicht freigebende erste Lage zu drückt, wobei die Betätigungsnase zum Bewegen der Klemmbacken voneinander weg in eine die Stange freigebende zweite Lage betätigt wird, wobei der Mittelpunkt jeder Durchgangsöffnung (38) zu dem Kipplager (35,40) einen ersten Abstand und zu dem Bereich des Angriffs der Betätigungsnase (30) an jedem Klemmbacken (33) einen zweiten Abstand bildet,
**dadurch gekennzeichnet,**
**daß** der zweite Abstand kleiner als der erste Abstand ist, daß die Betätigungsnase mit einem über ein Fluid in einem Kolbenraum betätigbaren Betätigungskolben (27) bewegt wird und daß zumindest eine Feder zumindest teilweise um die beiden Klemmbacken herum gelegt ist.

2. Einrichtung nach Anspruch 1, **dadurch gekennzeichnet, daß** der Betätigungskolben (27) auf seiner dem Kolbenraum abgewandten Seite eine quer zu seiner Hubrichtung verlaufende Stützebene (29) aufweist, dass die Betätigungsnase (30) mit ihrer der Stützebene (29) zugewandten Rückseite eben ausgebildet und lose schwimmend auf der Stützebene abgestützt ist und dass die beiden Klemmbacken (33) von der Kraft der Feder aufeinander zugedrückt sind.

3. Einrichtung nach Anspruch 2, **dadurch gekennzeichnet, dass** die Stützebene (29) rechtwinklig zur Hubrichtung verläuft.

4. Einrichtung nach Anspruch 2 oder 3, **dadurch gekennzeichnet, dass** die eben ausgebildete Rückseite der Betätigungsnase (30) rechtwinklig zur Hubrichtung des Betätigungskolbens (27) verläuft.

5. Einrichtung nach einem der Ansprüche 1,
**dadurch gekennzeichnet, daß** der Betätigungskolben (27) mit der Betätigungsnase einstückig ausgebildet ist.

6. Einrichtung nach Anspruch 1, **dadurch gekennzeichnet, dass** die Feder im Bereich der Betätigungsnase (30) und oder im Bereich des Kipplagers (35, 40) um die beiden Klemmbacken (33) herumgelegt ist.

7. Einrichtung nach einem der Ansprüche 1 bis 6,
**dadurch gekennzeichnet, dass** die Feder (36, 39) als O-Ring (36) oder als Hohlzylinder (39) ausgebildet ist und Kunststoff, vorzugsweise Polyurethan aufweist oder dass die Feder als gesprengter Ring aus Stahl und im Querschnitt vorzugsweise kreisförmig ausgebildet ist oder dass die Feder als vollständig geschlossener Ring ausgebildet ist.

8. Einrichtung nach Anspruch 7, **dadurch gekennzeichnet, dass** die als vollständig geschlossener Ring ausgebildete Feder in einer umlaufenden Nut (37) der beiden Klemmbacken (33) eingelegt ist.

9. Einrichtung nach einem der Ansprüche 1 - 7, **dadurch gekennzeichnet, dass** die Betätigungsnase (30) als entlang seiner Längsachse geteilter Stift ausgebildet ist.

10. Einrichtung nach Anspruch 9, **dadurch gekennzeichnet, dass** der geteilte Stift (30) hälftig geteilt ist.

11. Einrichtung nach einem der Ansprüche 1 - 10, **dadurch gekennzeichnet, dass** der Betätigungskolben, quer zu seiner Hubrichtung unter Bildung eines auf seinem Hubteil (27) lose abgestützten Betätigungsteils (28) zweigeteilt und das Betätigungsteil (28) auf seiner Rückseite eben ausgebildet ist sowie sich auf einer ebenfalls ebenen Vorderseite des Hubteils (27) schwimmend abstützt.

12. Einrichtung nach Anspruch 11, **dadurch gekennzeichnet, dass** das Betätigungsteil (28) an seiner dem Hubteil (27) abgewandten Seite die Betätigungsnase (30) aufweist.

13. Einrichtung nach einem der Ansprüche 1 - 12, **dadurch gekennzeichnet**, das das Betätigungsteil (28) als im Querschnitt u-förmiger Deckel ausgebildet ist, dessen Rückseite eben ist.

14. Einrichtung nach Anspruch 13, **dadurch gekennzeichnet, dass** der Deckel (28) die an den Enden der Klemmbacken (33) angeordnete Feder (36) umfasst.

15. Einrichtung nach einem der Ansprüche 1 - 14, **dadurch gekennzeichnet, dass** die Betätigungsnase (30) des Betätigungsteils (28) mit abgeschrägten Steuerflächen (31) der Klemmbacken (33) zusammenwirkt.

16. Einrichtung nach einem der Ansprüche 1 - 15, **dadurch gekennzeichnet, dass** die beiden Klemmbacken (33) an ihrem dem Betätigungsteil (28) abgewandten Ende zwischen sich einen an einer Hülse (21) festgelegten Distanzstift (35) als Kipplager aufweisen.

17. Einrichtung nach einem der Ansprüche 1 - 16,
**dadurch gekennzeichnet, dass** in der Hülse auf der dem Betätigungskolben abgewandten Seite eine Vertiefung als Kipplager für die beiden Klemmbacken (33) vorgesehen ist.

18. Einrichtung, nach einem der Ansprüche 1 - 17, **dadurch gekennzeichnet, daß** zwischen den beiden Klemmbacken (33) mindestens zwei weitere Klemmbacken (330) vorgesehen sind und daß diese inneren Klemmbacken (330) zu den Durchgangsöffnungen (38) fluchtende innere Durchgangsöffnungen (380) für die Achse oder Welle (12) aufweisen und von einer inneren Spreizlage um ein inneres Schwenklager in eine innere Nachbarschaftslage schwenkbar sind, wobei die innere Spreizlage und die innere Nachbarschaftslage als die Achse (12) mit den inneren Klemmbacken (330) kraftschlüssig festlegende Feststellage bzw. die Bewegung der Achse (12) in den inneren Durchgangsöffnungen (380) zulassende Freigabelage oder umgekehrt dienen.

19. Feststelleinrichtung gemäß Anspruch 18,
**dadurch gekennzeichnet, daß** die Steuerung der inneren Klemmbacken (330) durch die Klemmbacken (33) erfolgt.

20. Feststelleinrichtung gemäß Anspruch 18,
**dadurch gekennzeichnet, daß** die Steuerung der Klemmbacken (33) durch die inneren Klemmbacken (330) erfolgt.

21. Feststelleinrichtung gemäß einem der Anspruche 19 bis 20, **dadurch gekennzeichnet, daß** die Klemmbacken (30) mit den ihnen jeweils zugeordneten inneren Klemmbacken (330) in kraftschlüssiger Verbindung stehen.

22. Feststelleinrichtung gemäß einem der Ansprüche 19 bis 21, **dadurch gekennzeichnet, daß** die kraftschlüssige Festlegung der Achse (12) mit den Klemmbacken (30) und mit den inneren Klemmbacken (330) in der Feststellage reibungsschlüssig erfolgt.

23. Verwendung einer Feststelleinrichtung nach einem der Ansprüche 1 - 22 bei einem Kompaktzylinder (10).

24. Verwendung nach Anspruch 23, **dadurch gekennzeichnet, dass** das Gehäuse (11) des Kompaktzylinders (10) eine an die Form der Hülse (21) angepasste Ausnehmung (13) zur Aufnahme der Feststelleinrichtung (20) aufweist.

25. Einrichtung nach Anspruch 1, **dadurch gekennzeichnet, daß** der Rand jeder Durchgangsöffnung (38) durch die Kraft der Feder zur Anlage an der Stange (26) kommt und bei einer Bewegung derselben diese in eine selbsthemmende Sperrlage bringt.

## Claims

1. A fixing device comprising two clamping jaws (33) which are arranged symmetrically relative to each other and each having a through opening (38) for a rod, shaft or spindle (12) passing therethrough, at least one movable actuating nose (30) for engagement between the clamping jaws (33) against the force of at least one spring (36, 39) which urges the clamping jaws towards each other about a pivot bearing (35, 40) into a first position of not releasing the rod, wherein the actuating nose is actuated for movement of the damping jaws away from each other Into a second position of releasing the rod, wherein the centre point of each through opening (38) forms a first spacing relative to the pivot bearing (35, 40) and a second spacing relative to the region of engagement of the actuating nose (30) on each clamping jaw (33), **characterised In that** the second spacing is smaller than the first spacing, that the actuating nose is moved with an actuating piston (27) actuatable by way of a fluid in a piston chamber and that at least one spring is at least partially laid around the two clamping jaws.

2. A device according to claim 1 **characterised in that** on its side remote from the piston chamber the actuating piston (27) has a support plane (29) extending transversely with respect to its stroke direction, that the actuating nose (30) is flat with Its rear side towards the support plane (29) and is loosely floatingly supported on the support plane and that the two clamping jaws (33) are urged towards each other by the force of the spring.

3. A device according to claim 2 **characterised in that** the support plane (29) extends at a right angle to the stroke direction.

4. A device according to claim 2 or claim 3 **characterised in that** the flat rear side of the actuating nose (30) extends at a right angle to the stroke direction of the actuating piston (27).

5. A device according to claim 1 **characterised in that** the actuating piston (27) is in one piece with the actuating nose.

6. A device according to claim 1 **characterised In that** the spring is laid around the two clamping jaws (33) in the region of the actuating nose (40) and/or in the region of the pivot bearing (35, 40).

7. A device according to one of claims 1 to 6 **characterised in that** the spring (36, 39) is in the form of an O-ring (36) or a hollow cylinder (39) and comprises plastics material, preferably polyurethane, or that the spring is in the form of a sprung ring of steel and is preferably circular in cross-section or that the spring is in the form of a completely closed ring.

8. A device according to claim 7 **characterised in that** the spring in the form of a completely closed ring is fitted in a peripherally extending groove (37) in the two clamping jaws (33).

9. A device according to one of claims 1 to 7 **characterised in that** the actuating nose (30) is in the form of a pin which Is divided along its longitudinal axis.

10. A device according to claim 9 **characterised in that** the divided pin (30) is divided In half.

11. A device according to one of claims 1 to 10 **characterised in that** the actuating piston Is divided into two transversely with respect to its stroke direction forming an actuating portion (28) which is loosely supported on its stroke portion (27) and the actuating portion (28) is flat on its rear side and is floatingly supported on an also flat front side of the stroke portion (27).

12. A device according to claim 11 **characterised in that** the actuating portion (28) has the actuating nose (30) at its side remote from the stroke portion (27).

13. A device according to one of claims 1 to 12 **characterised in that** the actuating portion (28) is in the form of a cover which is U-shaped in cross-section and the rear side of which is flat.

14. A device according to claim 13 **characterised in that** the cover (28) encloses the spring (36) which is arranged at the ends of the clamping jaws (33).

15. A device according to one of claims 1 to 14 **characterised in that** the actuating nose (30) of the actuating portion (28) co-operates with bevelled control surfaces (31) of the clamping jaws (33).

16. A device according to one of claims 1 to 15 **characterised in that** at their end remote from the actuating portion (28) the two clamping jaws (33) have between them as the pivot bearing a spacer pin (35) which is fixed to a sleeve (21).

17. A device according to one of claims 1 to 16 **characterised in that** provided in the sleeve on the side remote from the actuating piston is a recess as the pivot bearing for the two clamping jaws (33).

18. A device according to one of claims 1 to 17 **characterised in that** at least two further clamping jaws (330) are provided between the two clamping jaws (33) and that said Inner clamping jaws (330) have Inner through openings (380), aligned with respect to the through openings (38), for the spindle or shaft (12), and are pivotable from an inner spread position about an inner pivotal bearing into an inner proximity position, wherein the inner spread position and the inner proximity position serve as the fixing position fixing the spindle (12) with the inner clamping jaws (330) in force-locking relationship and the release position permitting the movement of the spindle (12) in the inner through openings (380) respectively, or vice-versa.

19. A fixing device according to claim 18 **characterised in that** control of the inner clamping jaws (330) is effected by the clamping jaws (33).

20. A fixing device according to claim 18 **characterised in that** control of the clamping jaws (33) is effected by the inner clamping jaws (330).

21. A fixing device according to one of claims 19 and 20 **characterised in that** the clamping jaws (30) are connected in force-locking relationship to the inner clamping jaws (330) respectively associated with them.

22. A fixing device according to one of claims 19 to 21 **characterised in that** force-locking fixing of the spindle (12) to the clamping jaws (30) and to the inner clamping jaws (330) in the fixing position is effected in frictional engagement.

23. Use of a fixing device according to one of claims 1 to 22 in a compact cylinder (10).

24. Use according to claim 23 **characterised in that** the housing (11) of the compact cylinder (10) has an aperture (13) adapted to the shape of the sleeve (21) for receiving the fixing device (20).

25. A device according to claim 1 **characterised in that** the edge of each through opening (38) comes to bear against the rod (26) due to the force of the spring and upon movement thereof moves same into a self-locking blocking position.

## Revendications

1. Dispositif de blocage comprenant deux mâchoires de serrage (33) disposées symétriquement l'une de l'autre, dont chacune est munie d'une ouverture de passage (38) pour une tige, un arbre ou un axe (12) qui la traverse, au moins une protubérance d'actionnement mobile (30), destinée à attaquer entre les mâchoires de serrage (33) à l'encontre de la force d'au moins un ressort (36, 39) qui presse les mâchoires de serrage l'une sur l'autre, autour d'une articulation de basculement (35, 40) pour les placer dans une première position qui ne libère pas la tige, la protubérance d'actionnement étant actionnée pour éloigner les mâchoires de serrage l'une de l'autre en les plaçant dans une deuxième position qui libère la tige, le centre de chaque ouverture de passage (38) se trouvant à une première distance de l'articulation de basculement (35, 40) et à une deuxième distance de la région de l'attaque de la protubérance d'actionnement (30) sur chaque mâchoire de serrage (33), **caractérisé en ce que** la deuxième distance est plus petite que la première distance, **en ce que** la protubérance d'actionnement est mise en mouvement au moyen d'un piston d'actionnement (27) qui peut être actionné dans une chambre de piston au moyen d'un fluide, et **en ce qu'**au moins un ressort est placé au moins partiellement autour des deux mâchoires de serrage.

2. Dispositif selon la revendication 1, **caractérisé en ce que** le piston d'actionnement (27) présente sur son côté qui est éloigné de la chambre de piston un plan d'appui (29) qui s'étend transversalement à la direction de sa course, **en ce que**, sur sa face arrière dirigée vers le plan d'appui (29), la protubérance d'actionnement (30) est de forme plate et est appuyée sur le plan d'appui en flottement libre, et **en ce que** les deux mâchoires de serrage (33) sont pressées l'une vers l'autre par la force du ressort.

3. Dispositif selon la revendication 2, **caractérisé en ce que** le plan d'appui (29) s'étend perpendiculairement à la direction de la course.

4. Dispositif selon la revendication 2 ou 3, **caractérisé en ce que** la face arrière, de forme plane, de la protubérance d'actionnement (30) s'étend perpendiculairement à la direction de la course du piston d'actionnement (27).

5. Dispositif selon la revendication 1, **caractérisé en ce que** le piston d'actionnement (27) est réalisé en une seule pièce avec la protubérance d'actionnement.

6. Dispositif selon la revendication 1, **caractérisé en ce que** le ressort est placé autour des deux mâchoires de serrage (33) dans la région de la protubérance d'actionnement (30) et/ou dans la région de l'articulation de basculement (35, 40).

7. Dispositif selon une des revendications 1 à 6, **caractérisé en ce que** le ressort (36, 39) est constitué par une bague torique (36) ou par un cylindre creux (39) et comprend une matière plastique, de préférence du polyuréthane ou **en ce que** le ressort est constitué par un anneau fendu en acier et est de préférence de forme circulaire en section transversale, ou **en ce que** le ressort est constitué par un anneau entièrement fermé.

8. Dispositif selon la revendication 7, **caractérisé en ce que** le ressort, constitué par un anneau entièrement fermé, est emboîté dans une rainure circonférentielle (37) des deux mâchoires de serrage (33).

9. Dispositif selon une des revendications 1 à 7, **caractérisé en ce que** la protubérance d'actionnement (30) est constituée par un doigt divisé selon son axe longitudinal.

10. Dispositif selon la revendication 9, **caractérisé en ce que** le doigt divisé (30) est divisé en deux moitiés.

11. Dispositif selon une des revendications 1 à 10, **caractérisé en ce que** le piston d'actionnement est divisé en deux parties transversalement à la direction de sa course, avec formation d'un élément d'actionnement (28) appuyé librement sur son élément de course (27), et l'élément d'actionnement (28) est de forme plate sur sa face arrière et s'appuie en flottant sur une face avant également plate de l'élément de course (27).

12. Dispositif selon la revendication 11, **caractérisé en ce que** l'élément d'actionnement (28) présente la protubérance d'actionnement (30) sur son côté éloigné de l'élément de course (27).

13. Dispositif selon une des revendications 1 à 12, **caractérisé en ce que** l'élément d'actionnement (28) est constitué par un couvercle en forme de U en section transversale, dont la face arrière est plane.

14. Dispositif selon la revendication 13, **caractérisé en ce que** le couvercle (28) emboîte le ressort (36) disposé aux extrémités des mâchoires de serrage (33).

15. Dispositif selon une des revendications 1 à 14, **caractérisé en ce que** la protubérance d'actionnement (30) de l'élément d'actionnement (28) coopère avec des surfaces de commande chanfreinées (31) des mâchoires de serrage (33).

16. Dispositif selon une des revendications 1 à 15, **caractérisé en ce que** les deux mâchoires de serrage (33) présentent, comme articulation de basculement à leur extrémité éloignée de l'élément d'actionnement (28), une tige entretoise (35) qui est fixée à une douille (21).

17. Dispositif selon la revendication 16, **caractérisé en ce que**, dans la douille est prévue, sur le côté éloigné du piston d'actionnement, une cavité servant d'articulation de basculement pour les deux mâchoires de serrage (33).

18. Dispositif selon une des revendications 1 à 17, **caractérisé en ce qu'**au moins deux autres mâchoires de serrage (330) sont prévues entre les deux mâchoires de serrage (33) et **en ce que** ces mâchoires de serrage intérieures (330) présentent des ouvertures de passage intérieures (380) pour l'axe ou arbre (12), qui sont alignées sur les ouvertures de passage (38), et peuvent être basculées, autour d'une articulation de basculement intérieure, d'une position d'écartement intérieure à une position de proximité intérieure, la position d'écartement intérieure et la position de proximité intérieure servant respectivement de position de blocage qui fixe l'axe (12) aux mâchoires de serrage intérieures (330) en agissant par action de force, et de position de libération qui admet le déplacement de l'axe (12) dans les ouvertures de passage intérieures (380), ou inversement.

19. Dispositif de blocage selon la revendication 18, **caractérisé en ce que** la commande des mâchoires de serrage intérieures (330) est assurée par les mâchoires de serrage (33).

20. Dispositif de blocage selon la revendication 18, **caractérisé en ce que** la commande des mâchoires de serrage (33) est assurée par les mâchoires de serrage intérieures (330).

21. Dispositif de blocage selon une des revendications 19 ou 20, **caractérisé en ce que** les mâchoires de serrage (30) sont en liaison par action de force avec les mâchoires de serrage intérieures (330) qui leur sont respectivement associées.

22. Dispositif de blocage selon une des revendications 19 à 21, **caractérisé en ce que** l'immobilisation par action de force de l'axe (12) est réalisée avec les mâchoires de serrage (30) et qu'elle est réalisée par frottement avec les mâchoires de serrage intérieures (330) dans la position de blocage.

23. Utilisation d'un dispositif de blocage selon une des revendications 1 à 22 dans le cas d'un cylindre compact (10).

24. Utilisation selon la revendication 23, **caractérisée en ce que** le corps (11) du cylindre compact (10) présente un évidement (13) adapté à la forme du manchon (21), pour recevoir le dispositif de blocage (20).

25. Dispositif selon la revendication 1, **caractérisé en ce que** le bord de chaque ouverture de passage (38) entre en contact avec la tige (26) sous l'effet du ressort et, en présence d'un mouvement de cette tige, met cette dernière dans une position d'arrêt autobloquante.
